# FASCICULE DE BREVET EUROPEEN

(11) **EP 2 892 719 B1**
(45) Date de publication et mention de la délivrance du brevet: **23.05.2018**
(21) Numéro de dépôt: 13762160.3
(22) Date de dépôt: 09.08.2013
(51) Int. Cl.: B32B 17/10

(54) **VITRAGE ÉCLAIRÉ AVEC INTERCALAIRE DE FEUILLETAGE IMPRIME**
BELEUCHTETE VERGLASUNG MIT BEDRUCKTEM LAMINIERUNGSEINSATZ
ILLUMINATED GLAZING WITH PRINTED LAMINATION INSERT

(30) Priorité: 04.09.2012 FR 1258226
(43) Date de publication de la demande: 15.07.2015
(73) Titulaire: Saint-Gobain Glass France, 92400 Courbevoie (FR)
(72) Inventeur: VERRAT-DEBAILLEUL, Adèle, F-60150 Villers-sur-Coudun (FR); BERARD, Mathieu, F-75019 Paris (FR); MULET, Jean-Philippe, F-93100 Montreuil (FR)
(74) Mandataire: Saint-Gobain Recherche
(86) Numéro de dépôt international: PCT/FR2013/051918
(87) Numéro de publication internationale: WO 2014/037643

(56) Documents cités:
- WO-A1-2011/092419
- DE-A1- 10 204 359

## Description

La présente invention concerne un vitrage feuilleté, de préférence un vitrage pour véhicules, éclairé par sa tranche au moyen de diodes électroluminescentes et comprenant un système assez simple de masquage efficace de la lumière parasite produite par ces diodes.

On connaît des vitrages, et en particulier des vitrages pour véhicules automobiles, éclairés par leur tranche au moyen de diodes électroluminescentes (LED). Dans le cas de vitrages feuilletés, ces LED injectent la lumière dans au moins une des deux feuilles de verre qui fonctionne alors comme un guide d'onde, amenant la lumière jusqu'à un moyen d'extraction de la lumière (élément diffusant) situé à quelque distance du bord du vitrage.

L'intensité lumineuse émise par la face émettrice lambertienne de la LED est généralement très importante et la lumière est émise depuis celle-ci sur environ 180°. Pour des raisons esthétiques, on souhaite généralement masquer les LED et les soustraire au regard des personnes à proximité. Il existe différents moyens pour bloquer cette lumière directe des LED (appelée ci-après « lumière parasite ») :
- le moyen d'encapsulation généralement formé d'un polymère opaque (polyuréthanne chargé de noir de carbone) peut couvrir le bord du vitrage et, à condition d'être suffisamment épais, bloquer efficacement la lumière parasite ; ce moyen n'est toutefois pas disponible pour certains vitrages dits à intégration « flush » (affleurante) où l'encapsulation couvre la tranche de la feuille mais ne s'étend pas au-delà de celle-ci ;
- un émail de masquage peut être appliqué soit en bordure de la feuille éclairée, soit en bordure de la feuille non éclairée qui est collée à la feuille éclairée *via* l'intercalaire de feuilletage transparent (voir par exemple WO2011/092419 au nom de la demanderesse) ; l'épaisseur d'un tel émail est toutefois limitée à quelques microns ce qui est souvent insuffisant pour un masquage efficace ;
- enfin, la carte à circuits imprimés sur laquelle sont montées les LED peut faire écran à la lumière ; son pouvoir opacifiant et/ou son étendue sont toutefois généralement insuffisants pour masquer parfaitement la lumière parasite.

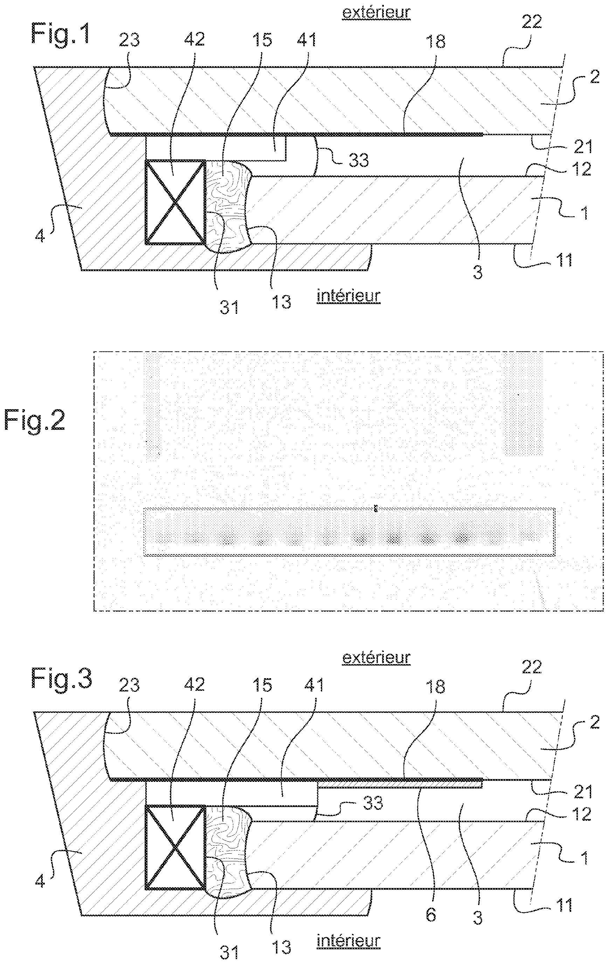

La figure 1, décrite plus en détail ci-après, montre un vitrage feuilleté à intégration « flush » selon l'état de la technique où la lumière parasite est bloquée sur le côté intérieur par l'élément d'encapsulation et vers l'extérieur par un émail de masquage insuffisamment opaque. Il en résulte des points lumineux résiduels visibles depuis l'extérieur et représentés à la figure 2.

La présente invention est basée sur l'idée de masquer la lumière parasite par une mince couche opaque imprimée en bordure de l'intercalaire de feuilletage et qui se trouvera, après feuilletage, à proximité immédiate des barrettes de LED, au niveau de la zone où les halos lumineux de la lumière parasite apparaîtraient en l'absence de cette couche.

Plus précisément, la présente invention a pour objet un vitrage feuilleté éclairant, selon la revendication 1, comprenant
(a) une première feuille, en verre minéral ou organique, avec une première face principale, une deuxième face principale et une tranche,
(b) une deuxième feuille, en verre minéral ou organique, avec une première face principale, une deuxième face principale et une tranche,
(c) un intercalaire de feuilletage transparent, en contact adhésif avec la deuxième face principale de la première feuille et avec la première face principale de la deuxième feuille,
(d) au moins une barrette de diodes électroluminescentes (LED) comportant une carte à circuits imprimés (PCB) et une pluralité de LED, positionnée de manière à ce que les faces émettrices des LED soient en regard de la tranche de la première feuille,
(e) un ou plusieurs éléments diffusants situés de préférence sur une des faces principales de la première feuille ou dans l'épaisseur de la première feuille,
l'intercalaire de feuilletage (c) comportant, sur au moins une de ses faces principales, une couche opaque de masquage s'étendant du bord de l'intercalaire vers le centre du vitrage de manière à couvrir une zone où la lumière des LED, en l'absence de ladite couche opaque de masquage, serait visible sous forme de halos lumineux à travers la deuxième feuille.

Le vitrage de la présente invention est un vitrage feuilleté comportant au moins deux feuilles simples collées l'une à l'autre de manière connue au moyen de l'intercalaire de feuilletage. Il est important de noter que, dans la description ci-après du vitrage, le terme « première feuille » désignera toujours la feuille de verre éclairée au niveau de sa tranche par la ou les sources lumineuses. La première feuille ou feuille éclairée est de préférence celle en contact avec l'intérieur du véhicule ou du bâtiment. La deuxième feuille de verre est par conséquent de préférence celle en contact avec l'extérieur du véhicule ou du bâtiment.

Chacune des deux feuilles du vitrage de la présente invention a une tranche et deux faces principales. On appellera première face principale la face destinée à être orientée vers l'intérieur de l'habitacle ou du bâtiment et deuxième face principale celle qui sera dirigée vers l'extérieur du bâtiment ou de l'habitacle du véhicule.

On entend par couche opaque dans la présente invention, des couches présentant une densité optique au moins égale à 2.

La couche opaque de masquage est une couche imprimée, par toute technique appropriée, de préférence par sérigraphie. Elle est de préférence de couleur noire ou grise, mais pourrait tout aussi bien être colorée, bien qu'il n'y ait pas d'intérêt à conférer une couleur particulière à cette couche qui sera en principe invisible après incorporation de l'intercalaire dans le vitrage.

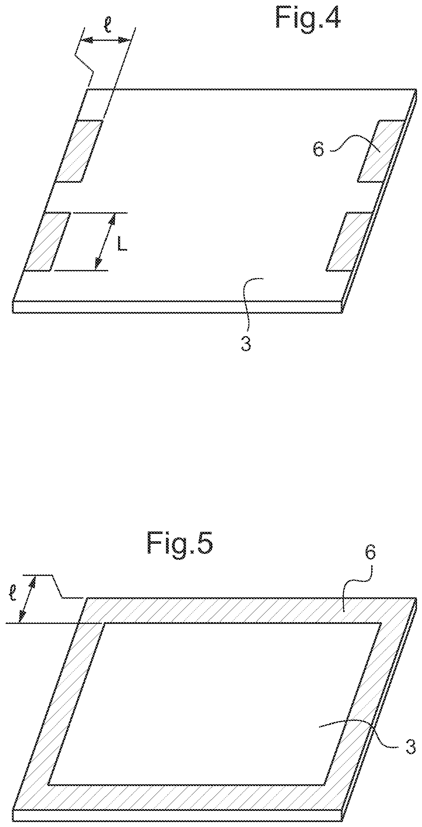

La couche opaque a la forme d'une ou plusieurs bandes allongée(s), généralement de forme rectangulaire, s'étendant le long du bord de l'intercalaire de feuilletage. Il est essentiel que ladite bande de masquage s'étende jusqu'au bord de l'intercalaire et épouse la forme de ce bord. Autrement dit, le bord de l'intercalaire doit se superposer strictement à un des bords de la bande de masquage (voir figure 4), au moins dans la zone où il s'agit de masquer la lumière parasite.

La longueur de la bande de masquage peut être inférieure à celle du bord de l'intercalaire. Elle peut notamment être similaire à celle de la barrette de LED à proximité de laquelle elle se retrouvera dans le vitrage final, par exemple comprise entre 5 et 80 cm, de préférence entre 10 et 50 cm et en particulier entre 15 et 40 cm. La bande de masquage peut toutefois avoir la même longueur que le bord du vitrage.

L'intercalaire peut comprendre une ou plusieurs bandes opaques et, enfin, la bande de masquage peut avoir la forme d'un cadre continu occupant tout le pourtour de l'intercalaire (voir figure 5).

La bande doit être suffisamment large pour bloquer toute la lumière parasite mais doit être suffisamment étroite pour rester invisible depuis l'intérieur ou l'extérieur du véhicule, une fois que le vitrage est monté. La largeur de chaque bande de masquage est généralement comprise entre 0,5 et 5 cm, de préférence entre 0,8 et 4 cm et en particulier entre 1 et 3 cm.

La couche opaque de masquage peut être une couche absorbant la lumière, une couche réfléchissant la lumière, ou une couche qui à la fois absorbe une partie de la lumière et réfléchit une partie de la lumière.

Une couche opaque réfléchissant la lumière est de préférence une couche métallique, par exemple une couche d'argent.

Des compositions et procédés de sérigraphie pour imprimer des couches opaques noires, colorées ou réfléchissantes sont décrits par exemple dans les demandes FR2928929 et FR2974103 au nom de la Demanderesse.

L'intercalaire de feuilletage peut être en n'importe quel matériau polymère transparent couramment utilisé à cette fin, par exemple en poly(vinyle butyral) (PVB), en polyuréthanne thermoplastique (TPU) ou en copolymère d'éthylène et d'acétate de vinyle (EVA). Le PVB est particulièrement préféré.

La couche opaque de masquage peut être appliquée sur l'une des deux faces de l'intercalaire, ou bien sur les deux faces. Dans un mode de réalisation préféré, elle est appliquée sur la face principale de l'intercalaire de feuilletage qui est en contact adhésif avec la première face principale de la deuxième feuille. Dans ce mode de réalisation, l'intercalaire peut comporter avantageusement sur l'autre face principale - c'est-à-dire sur celle en contact avec la deuxième face de la première feuille - une mince couche réfléchissante, qui n'a pas besoin d'être opaque et dont l'étendue est peu différente de celle de la couche opaque. Une grande partie de la lumière parasite provenant des LED est ainsi réfléchie par cette couche réfléchissante et « réinjectée » dans la première feuille. La lumière qui traverse cette couche est absorbée ou réfléchie par la couche opaque de masquage imprimée sur l'autre face de l'intercalaire.

La deuxième feuille de verre est de préférence plus grande que la première et dépasse cette dernière au moins sur le bord du vitrage où sont la ou les barrettes de LED. La ou les barrettes LED sont alors fixées par l'intermédiaire de la PCB sur la première face principale de la deuxième feuille dans la zone où celle-ci dépasse la première feuille, un bord de la PCB étant de préférence en contact avec la tranche de l'intermédiaire de feuilletage.

En effet, la PCB est faite en un matériau plus ou moins opaque et joue, comme la couche opaque imprimée sur le bord de l'intercalaire, un rôle d'écran à la lumière parasite. Le contact entre le bord de la PCB et le bord de l'intercalaire de feuilletage assure ainsi la continuité de l'opacité. Si la PCB n'était pas en contact avec l'intercalaire, la fente ainsi laissée entre les deux pourrait de façon indésirable laisser passer la lumière des LED.

L'intercalaire de feuilletage portant la couche opaque a de préférence une étendue inférieure à celle de chacune des feuilles de verre. Un espace en forme de rainure est ainsi créé entre le bord de la deuxième face principale de la première feuille et le bord de la première face principale de la deuxième feuille. Pour les raisons expliquées au paragraphe précédant, la PCB est alors insérée dans cet espace en s'appuyant sur la première face principale de la deuxième feuille de verre, et est en contact, par l'un de ses bords, avec la tranche de l'intercalaire de feuilletage.

Les éléments diffusants sont formés par exemple par une mince couche de particules ayant une taille moyenne comprise entre environ 50 nm et 1 µm, ces particules étant fixées sur la première feuille au moyen d'un liant minéral ou organique.

Les particules peuvent être des particules minérales, par exemple à base d'oxydes, de carbures ou de nitrures métalliques. On peut citer à titre d'exemples de particules préférées les particules de silice, d'alumine, de zircone, d'oxyde de titane, d'oxyde de cérium.

De telles couches diffusantes sont décrites par exemple dans la demande internationale WO01/90787.

Dans un mode de réalisation préféré du vitrage de la présente invention, la deuxième feuille comporte, sur sa première face principale, c'est-à-dire sur la face qui est en contact avec l'intercalaire de feuilletage, une couche d'émail opaque s'étendant depuis le bord de la deuxième feuille vers le centre du vitrage, de préférence au moins jusqu'à la limite de la couche opaque de masquage sur l'intercalaire de feuilletage en contact avec la première face principale de la deuxième feuille. La couche d'émail vient ainsi « doubler » la couche de masquage imprimée sur l'intercalaire.

Le vitrage feuilleté de la présente invention est généralement surmoulé, sur au moins une partie de sa périphérie, de préférence sur toute sa périphérie, d'un élément d'encapsulation. Cet élément est formé de manière connue, de préférence par injection réaction (RIM, de l'anglais *reaction-injection moulding*) de monomères aboutissant à des polymères réticulés thermodurcis. Le polymère le plus communément utilisé est de type polyuréthanne.

Cet élément d'encapsulation est en contact au moins avec la tranche de la deuxième feuille et avec la première face principale de la première feuille. La partie de l'élément d'encapsulation qui s'étend sur la première face principale de la première feuille a une fonction anti-lumière parasite. Sa largeur doit être suffisante pour que les LED ne soient pas visibles directement depuis l'intérieur du véhicule.

L'utilisation d'un intercalaire de feuilletage imprimé, sur son bord, d'une couche opaque en forme d'une ou plusieurs bandes permet ainsi de résoudre le problème de la lumière parasite sans augmenter la complexité du procédé de feuilletage. A la connaissance de la Demanderesse un tel intercalaire de feuilletage imprimé sur son bord d'une ou plusieurs bandes opaques n'a jusqu'ici pas été décrit. La présente invention a par conséquent également pour objet un intercalaire de feuilletage, pour la fabrication d'un vitrage feuilleté tel que décrit ci-dessus, constitué d'une feuille en poly(butyral de vinyle) comportant sur au moins une de ses faces principales une couche opaque de masquage sous forme d'une ou plusieurs bandes s'étendant depuis le bord de l'intercalaire vers le centre, lesdites bandes ayant une largeur comprise entre 0,5 et 5 cm, et couvrant au total de 2 à 25 % de préférence de 4 à 15 %, et en particulier de 5 à 10 % de la face de l'intercalaire de feuilletage.

Dans un mode de réalisation particulier, la couche opaque de masquage est une bande unique et continue, de type cadre, couvrant toute la périphérie d'au moins une des faces principales de l'intercalaire.

La présente invention est illustrée à présent à l'aide de quelques modes de réalisation représentés dans les figures ci-après dans lesquelles
la figure 1 représente une coupe transversale du bord d'un vitrage feuilleté éclairé par des LED selon l'état de la technique,
la figure 2 est le négatif d'un cliché de vidéophotométrie montrant les points lumineux résiduels (lumière parasite) observés pour le vitrage de la figure 1,
la figure 3 montre, en coupe transversale, un premier mode de réalisation du bord d'un vitrage selon l'invention,
la figure 4 montre une vue en perspective d'un premier mode de réalisation d'un intercalaire de feuilletage selon l'invention et
la figure 5 montre une vue en perspective d'un deuxième mode de réalisation d'un intercalaire de feuilletage selon l'invention.

Le vitrage feuilleté de la figure 1 comporte une première feuille de verre 1 avec une première face principale 11, une deuxième face principale 12, et une tranche 13 par laquelle une LED 42 supportée par une PCB 41 injecte de la lumière dans la première feuille. L'intercalaire de feuilletage 3 en contact adhésif avec la première surface principale 21 de la deuxième feuille et la deuxième surface principale 12 de la première feuille, a une étendue moins importante que les deux feuilles de verre 1,2 et définit ainsi entre ces deux feuilles un espace en forme de rainure. Le couplage optique de la surface émettrice 31 de la LED 42 et la tranche 13 de la première feuille est assuré par une colle transparente 15. La PCB 41 est collée directement sur la première surface principale de la deuxième feuille. L'élément d'encapsulation 4 est en contact avec la tranche 23 de la deuxième feuille, la PCB, la LED 42, la colle 15 et la première surface principale 11 de la première feuille.

L'élément d'encapsulation 4 en contact avec la première face principale 11 de la première feuille bloque toute lumière parasite susceptible d'être émise vers l'intérieur.

Un émail opaque 18 appliqué sur la première face principale 21 de la deuxième feuille masque cette zone de contact entre la PCB et la feuille 2 vis-à-vis de l'extérieur. Le pouvoir opacifiant combiné de cet émail 18 et de la PCB 41 est suffisant pour bloquer l'émission de la lumière directe de la LED vers l'extérieur. Toutefois, au-delà de la PCB 41, le pouvoir opacifiant de l'émail seul est insuffisant pour faire écran à la lumière parasite.

La figure 2 montre le négatif d'un cliché de vidéophotométrie du vitrage de la figure 1 vue depuis l'extérieur. Chaque point sombre sur cette figure correspond à un point de lumière parasite d'une LED ayant traversé l'émail 18.

La figure 3 montre un premier mode de réalisation d'un vitrage selon la présente invention. La comparaison avec la figure 1 montre que l'une des différences de ce vitrage réside dans la présence d'une couche opaque 6. Cette couche opaque 6 est imprimée sur la face de l'intercalaire de feuilletage 3 qui est en contact adhésif avec la première face principale 21 de la deuxième feuille 2. Cette couche s'étend du bord, ou de la tranche 33, de l'intercalaire 3 jusqu'au bord de la couche d'émail 18, empêchant ainsi la lumière provenant de la LED 42 de traverser la couche d'émail 18 et d'être visible depuis l'extérieur. Le vitrage de la figure 3 diffère en outre de celui de l'état de la technique représenté à la figure 1 par le fait que la PCB 41 est en contact avec l'intercalaire 3 et la couche 6, assurant ainsi la continuité d'un écran à la lumière parasite.

La figure 4 montre un exemple d'un intercalaire de feuilletage selon l'invention. Cet intercalaire 3 comporte au niveau de deux bords opposés deux bandes imprimées 6 opaques de longueur *L* et de largeur *l*.
Sur la figure 5, la couche opaque 6 a la forme d'une bande unique périphérique de largeur uniforme *l*, bordant l'intercalaire 6 à la manière d'un cadre.

## Revendications

1. Vitrage feuilleté éclairant, comprenant
- une première feuille (1), en verre minéral ou organique, avec une première face principale (11), une deuxième face principale (12) et une tranche (13),
- une deuxième feuille (2), en verre minéral ou organique, avec une première face principale (21), une deuxième face principale (22) et une tranche (23),
- un intercalaire de feuilletage (3) transparent, en contact adhésif avec la deuxième face principale (12) de la première feuille (1) et avec la première face principale (21) de la deuxième feuille (2),
- au moins une barrette de diodes électroluminescentes (LED) comportant une carte à circuits imprimés (PCB) (41) et une pluralité de LED (42), positionnée de manière à ce que les faces émettrices (43) des LED soient en regard de la tranche (13) de la première feuille (1),
- un ou plusieurs éléments diffusants situés de préférence sur une des faces principales de la première feuille ou dans l'épaisseur de la première feuille,
**caractérisé par le fait que** l'intercalaire de feuilletage (3) comporte une couche opaque de masquage (6) imprimée sur au moins une de ses faces principales, s'étendant du bord de l'intercalaire vers le centre du vitrage de manière à couvrir une zone où la lumière des LED, en l'absence de ladite couche opaque de masquage, serait visible sous forme de halos lumineux à travers la deuxième feuille (2).

2. Vitrage feuilleté selon la revendication 1, **caractérisé par le fait que** la couche opaque de masquage (6) est une couche absorbant la lumière, une couche réfléchissant la lumière, ou une couche absorbant et réfléchissant la lumière.

3. Vitrage feuilleté selon la revendication 1 ou 2, **caractérisé par le fait que** la couche opaque de masquage (6) est une couche métallique, de préférence une couche d'argent.

4. Vitrage feuilleté selon l'une quelconque des revendications précédentes, **caractérisé par le fait que** la deuxième feuille (2) est plus grande que la première feuille (2) et que la barrette LED est fixée par l'intermédiaire de la PCB (41) sur la première face principale (21) de la deuxième feuille dans la zone où celle-ci dépasse la première feuille (2), un bord de la PCB (41) étant de préférence en contact avec la tranche (33) de l'intermédiaire de feuilletage (3).

5. Vitrage feuilleté selon l'une quelconque des revendications précédentes, **caractérisé par le fait que** la deuxième feuille (2) comporte, sur sa première face principale (21), une couche d'émail opaque (18) s'étendant depuis le bord de la deuxième feuille vers le centre du vitrage, de préférence au moins jusqu'à la limite de la couche opaque de masquage (6) sur l'intercalaire de feuilletage (3) en contact avec la première face principale (21) de la deuxième feuille.

6. Vitrage feuilleté selon l'une quelconque des revendications précédentes, **caractérisé par le fait qu'**il comprend en outre un élément d'encapsulation (4) en contact au moins avec la tranche (23) de la deuxième feuille (2) et avec la première face principale (11) de la première feuille (1).

7. Vitrage feuilleté selon l'une quelconque des revendications précédentes, **caractérisé par le fait que** la couche opaque de masquage (6) est appliquée sur la face principale de l'intercalaire de feuilletage qui est en contact adhésif avec la première face principale (21) de la deuxième feuille (1).

8. Vitrage feuilleté selon l'une quelconque des revendications précédentes, **caractérisé par le fait que** l'intercalaire de feuilletage (3) a une étendue inférieure à celle de chacune des feuilles de verre définissant ainsi un espace en forme de rainure entre le bord de la deuxième face principale (12) de la première feuille (1) et le bord de la première face principale (21) de la deuxième feuille (2), la PCB (41) étant insérée dans cet espace et s'appuyant sur la première face principale (21) de la deuxième feuille de verre (1), un bord de la PCB (41) étant en contact avec la tranche (33) de l'intercalaire de feuilletage (3).

## Patentansprüche

1. Leuchtende Verbundverglasung, umfassend
- eine erste Scheibe (1) aus mineralischem oder organischem Glas mit einer ersten Hauptseite (11), einer zweiten Hauptseite (12) und einer Kante (13),
- eine zweite Scheibe (2) aus mineralischem oder organischem Glas mit einer ersten Hauptseite (21), einer zweiten Hauptseite (22) und einer Kante (23),
- eine durchsichtige Verbundzwischenschicht (3) in Haftkontakt mit der zweiten Hauptseite (12) der ersten Scheibe (1) und mit der ersten Hauptseite (21) der zweiten Scheibe (2),
- mindestens eine Leiste mit Leuchtdioden (LED), die eine Leiterplatte (PCB) (41) und eine Vielzahl von LEDs (42) aufweist, die so positioniert sind, dass sich die emittierenden Flächen (43) der LEDs gegenüber der Kante (13) der ersten Scheibe (1) befinden,
- ein oder mehrere Streuelemente, die sich bevorzugt auf einer der Hauptseiten der ersten Scheibe oder in der Dicke der ersten Scheibe befinden,
**dadurch gekennzeichnet, dass** die Verbundzwischenschicht (3) eine undurchsichtige Maskierungsschicht (6) aufweist, die auf mindestens einer ihrer Hauptseiten gedruckt ist und sich vom Rand der Zwischenschicht zur Mitte der Verglasung erstreckt, sodass eine Zone bedeckt ist, in der das Licht der LEDs bei Abwesenheit der undurchsichtigen Maskierungsschicht durch die zweite Scheibe (2) in Form von Lichthöfen sichtbar ist.

2. Verbundverglasung nach Anspruch 1, **dadurch gekennzeichnet, dass** die undurchsichtige Maskierungsschicht (6) eine das Licht absorbierende Schicht, eine das Licht reflektierende oder eine das Licht absorbierende und reflektierende Schicht ist.

3. Verbundverglasung nach Anspruch 1 oder 2, **dadurch gekennzeichnet, dass** die undurchsichtige Maskierungsschicht (6) eine metallische Schicht, bevorzugt eine Silberschicht, ist.

4. Verbundverglasung nach einem der vorhergehenden Ansprüche, **dadurch gekennzeichnet, dass** die zweite Scheibe (2) größer als die erste Scheibe (2) ist und dass die LED-Leiste mithilfe der PCB (41) auf der ersten Hauptseite (21) der zweiten Scheibe in der Zone befestigt ist, in der diese über die erste Scheibe (2) hinausgeht, wobei ein Rand der PCB (41) bevorzugt in Kontakt mit der Kante (33) der Verbundzwischenschicht (3) steht.

5. Verbundverglasung nach einem der vorhergehenden Ansprüche, **dadurch gekennzeichnet, dass** die zweite Scheibe (2) auf ihrer ersten Hauptseite (21) eine undurchsichtige Emailleschicht (18) aufweist, die sich von dem Rand der zweiten Scheibe zur Mitte der Verglasung erstreckt, bevorzugt mindestens bis zur Grenze der undurchsichtigen Maskierungsschicht (6) auf der Verbundzwischenschicht (3) in Kontakt mit der ersten Hauptseite (21) der zweiten Scheibe.

6. Verbundverglasung nach einem der vorhergehenden Ansprüche, **dadurch gekennzeichnet, dass** sie zudem ein Verkapselungselement (4) umfasst, das mit mindestens der Kante (23) der zweiten Scheibe (2) und mit der ersten Hauptseite (11) der ersten Scheibe (1) in Kontakt steht.

7. Verbundverglasung nach einem der vorhergehenden Ansprüche, **dadurch gekennzeichnet, dass** die undurchsichtige Maskierungsschicht (6) auf die Hauptseite der Verbundzwischenschicht aufgetragen wird, die in Haftkontakt mit der ersten Hauptseite (21) der zweiten Scheibe (1) steht.

8. Verbundverglasung nach einem der vorhergehenden Ansprüche, **dadurch gekennzeichnet, dass** die Verbundzwischenschicht (3) eine geringere Ausdehnung als jede Glasscheibe aufweist, sodass ein nutförmiger Raum zwischen dem Rand der zweiten Hauptseite (12) der ersten Scheibe (1) und dem Rand der ersten Hauptseite (21) der zweiten Scheibe (2) definiert wird, wobei die PCB (41) in diesen Raum eingelassen und an der ersten Hauptseite (21) der zweiten Glasscheibe (1) angelagert ist, wobei ein Rand der PCB (41) in Kontakt mit der Kante (33) der Verbundzwischenschicht (3) steht.

## Claims

1. A laminated illuminating glazing unit, comprising:
- a first sheet (1), made of mineral or organic glass, with a first main face (11), a second main face (12) and an edge face (13);
- a second sheet (2), made of mineral or organic glass, with a first main face (21), a second main face (22) and an edge face (23);
- a transparent lamination interlayer (3) making adhesive contact with the second main face (12) of the first sheet (1) and with the first main face (21) of the second sheet (2);
- at least one strip of light-emitting diodes (LEDs), comprising a printed circuit board (PCB) (41) and a plurality of LEDs (42), positioned so that the emitting faces (43) of the LEDs face the edge face (13) of the first sheet (1); and
- one or more scattering elements preferably located on one of the main faces of the first sheet or in the thickness of the first sheet,
**characterized in that** the lamination interlayer (3) comprises, on at least one of its main faces, an opaque printed masking layer (6) extending from the edge of the interlayer toward the center of the glazing unit so as to cover a zone in which the light from the LEDs would, in the absence of said opaque masking layer, be visible, in the form of luminous halos, through the second sheet (2).

2. The laminated glazing unit as claimed in claim 1, **characterized in that** the opaque masking layer (6) is a layer that absorbs light, a layer that reflects light, or a layer that absorbs and reflects light.

3. The laminated glazing unit as claimed in either of claims 1 and 2, **characterized in that** the opaque masking layer (6) is a metal layer, and preferably a silver layer.

4. The laminated glazing unit as claimed in any one of the preceding claims, **characterized in that** the second sheet (2) is larger than the first sheet (2), and **in that** the LED strip is fixed, by way of the PCB (41), to the first main face (21) of the second sheet in the zone where the latter extends beyond the first sheet (2), one edge of the PCB (41) preferably making contact with the edge face (33) of the lamination interlayer (3).

5. The laminated glazing unit as claimed in any one of the preceding claims, **characterized in that** the second sheet (2) comprises, on its first main face (21), an opaque enamel layer (18) extending from the edge of the second sheet toward the center of the glazing unit, preferably at least as far as the limit of the opaque masking layer (6) on the lamination interlayer (3) making contact with the first main face (21) of the second sheet.

6. The laminated glazing unit as claimed in any one of the preceding claims, **characterized in that** it furthermore comprises an encapsulating element (4) making contact at least with the edge face (23) of the second sheet (2) and with the first main face (11) of the first sheet (1).

7. The laminated glazing unit as claimed in any one of the preceding claims, **characterized in that** the opaque masking layer (6) is applied to that main face of the lamination interlayer which makes adhesive contact with the first main face (21) of the second sheet (1).

8. The laminated glazing unit as claimed in any one of the preceding claims, **characterized in that** the lamination interlayer (3) has a smaller extent than that of each of the glass sheets, thus defining a groove-shaped space between the edge of the second main face (12) of the first sheet (1) and the edge of the first main face (21) of the second sheet (2), the PCB (41) being inserted into this space and bearing against the first main face (21) of the second glass sheet (1), one edge of the PCB (41) making contact with the edge face (33) of the lamination interlayer (3).
